# FASCICULE DE BREVET EUROPEEN

(11) **EP 1 074 104 B1**
(45) Date de publication et mention de la délivrance du brevet: **20.08.2003**
(21) Numéro de dépôt: 99915806.6
(22) Date de dépôt: 21.04.1999
(51) Int. Cl.: H04J 3/06

(54) **PROCEDE DE SYNCHRONISATION DANS UN RESEAU DE COMMUNICATION ET APPAREILS DE MISE EN OEUVRE**
VERFAHREN UND VORRICHTUNGEN ZUR SYNCHRONISIERUNG IN EINEM KOMMUNIKATIONSNETZ
METHOD FOR SYNCHRONISATION IN A COMMUNICATION NETWORK AND IMPLEMENTING APPLIANCES

(30) Priorité: 21.04.1998 FR 9804982
(43) Date de publication de la demande: 07.02.2001
(60) Demande divisionnaire: 02003866.7
(73) Titulaire: THOMSON multimedia, 92100 Boulogne Billancourt (FR)
(72) Inventeur: STRAUB, Gilles, F-92648 Boulogne Cedex (FR); DORE, Renaud, F-92648 Boulogne Cedex (FR); BÜRKLIN, Helmut, F-92648 Boulogne Cedex (FR); LOPEZ, Patrick, F-92648 Boulogne Cedex (FR); DEMOULIN, Vincent, F-92648 Boulogne Cedex (FR)
(74) Mandataire: Kohrs, Martin
(86) Numéro de dépôt international: FR9900944
(87) Numéro de publication internationale: WO99055028

(56) Documents cités:
- EP-A- 0 643 503
- GB-A- 2 264 842
- US-A- 4 815 110
- US-A- 5 052 029

## Description

L'invention concerne un procédé de synchronisation d'appareils connectés à un réseau de communication comportant des liaisons sans fil. Elle s'applique notamment dans le cadre d'un réseau de communication domestique. L'invention concerne également des appareils de mise en oeuvre de ce procédé.

Dans un bus de type IEEE 1394 décrit dans le standard IEEE 1394-1995, chaque appareil ('noeud') relié au bus estampille les paquets isochrones qu'il émet avec une information temporelle indiquant à quel instant le paquet doit être restitué par l'appareil récepteur.

Chaque appareil (ou 'noeud') relié au bus comporte un registre d'horloge de 32 bits, incrémenté à la fréquence horloge du bus, à savoir 24,576 MHz. Ce registre (appelé 'Cycle Time Register' dans le standard IEEE 1394-1995) est divisé en trois plages (les 12 bits de poids le plus faible, les 13 bits de poids intermédiaire et les 7 bits de poids le plus fort), qui sont donc incrémentées respectivement à des fréquences de 24,576 MHz, 8 KHz et 1 Hz.

En présence d'appareils susceptibles de participer à un trafic isochrone, et pour réaliser la synchronisation de ces appareils, l'un d'eux est élu 'appareil ou noeud maître de cycle' ('Cycle master' selon la terminologie IEEE1394). L'appareil maître de cycle génère un paquet de début de cycle ou de trame isochrone toutes les 125 µs, ce qui correspond à une fréquence de 8 KHz. Ce paquet comporte la valeur du registre d'horloge de 32 bits de l'appareil maître de cycle au moment de l'émission. Un appareil récepteur du paquet asservit son propre registre de 32 bits aux valeurs reçues de l'appareil maître de cycle.

Le document IEEE 1394-1995 mentionné ci-dessus concerne l'architecture du bus série. Un standard additionnel, concernant l'interconnexion de plusieurs bus par l'intermédiaire de ponts ('bridges' selon le vocabulaire anglo-saxon généralement utilisé) est en cours d'élaboration. La dernière version de ce projet actuellement disponible auprès de l'IEEE porte la référence P1394.1 Draft 0.04, et date du 07 février 1999, la version précédente datant du 18 octobre 1997.

Lorsque l'on interconnecte plusieurs bus au moyen d'un pont, il est indispensable de disposer de la même horloge de part et d'autre du pont, pour une interprétation correcte des marqueurs temporels des paquets et une correction des dérives d'horloges.

Dans ce but, l'invention a pour objet un procédé de synchronisation dans un réseau de communication comportant au moins deux bus interconnectés par un réseau de communication sans fil, chaque bus étant relié au réseau de communication sans fil par un portail, ledit procédé étant caractérisé en ce qu'il comporte les étapes :
- de détermination d'un portail dit serveur de cycle et dont une horloge propre servira de référence aux autres portails ;
- d'émission par chaque portail d'un signal de synchronisation à un instant prédéterminé par rapport au début d'une trame et caractéristique de chaque portail, ladite trame étant définie par rapport à l'horloge interne propre de chaque portail, ledit signal de synchronisation étant réalisé par l'insertion d'une fenêtre de contrôle ;
- de détection par chaque portail des fenêtres de contrôle d'autres portails et de sélection d'une des fenêtres détectées pour la synchronisation d'une horloge propre du portail récepteur avec l'horloge du portail serveur de cycle, ladite fenêtre sélectionnée correspondant à un portail dont l'horloge est déjà synchronisée avec celle du portail serveur de cycle.

L'horloge est ainsi propagée de proche en proche parmi les portails, qui se calent les uns après les autres sur l'horloge du serveur de cycle ou sur celle d'un portail plus proche de ce dernier et dont l'horloge est déjà au moins partiellement synchronisée.

Selon le mode de réalisation préférentiel de l'invention, une fenêtre de contrôle comporte au moins une partie d'une valeur de l'horloge du portail émetteur de ladite fenêtre de contrôle, ladite valeur étant celle de l'horloge au moment de l'émission de ladite fenêtre de contrôle, ladite valeur transmise étant utilisée par le portail récepteur pour mettre à jour la valeur de son horloge propre.

Selon un mode de réalisation de l'invention la valeur d'horloge transmise par un portail comporte une correction pour compenser le temps de traitement de la fenêtre de contrôle à l'émission.

Selon un mode de réalisation de l'invention, la valeur d'horloge reçue par un portail est corrigée, avant la mise à jour de la valeur de l'horloge propre, pour prendre en compte le temps de traitement en réception dudit portail.

Selon un mode de réalisation de l'invention, ladite valeur d'horloge est scindée en plusieurs groupes de bits transmis sur des fenêtres de contrôle successives émises par un même portail.

Selon un mode de réalisation de l'invention, le procédé comporte en outre l'étape de détermination par chaque portail de sa distance par rapport au portail serveur de cycle, ladite distance d'un portail donné étant définie comme étant le nombre minimum de portails répéteurs requis pour qu'une information en provenance du portail serveur de cycle parvienne au dit portail donné.

Selon un mode de réalisation de l'invention, la fenêtre de contrôle choisie par un portail donné pour se synchroniser est la fenêtre de contrôle d'un portail ayant la distance la plus faible parmi les fenêtres de contrôle reçues par ledit portail donné.

Selon un mode de réalisation de l'invention, le procédé comporte en outre l'étape de verrouillage d'une boucle à verrouillage de phase d'un portail récepteur sur l'instant de réception de la fenêtre de contrôle sélectionnée, ladite boucle à verrouillage de phase étant utilisée pour incrémenter un registre comportant la valeur d'horloge propre dudit portail.

Selon un mode de réalisation de l'invention, le procédé comporte en outre l'étape de sélection d'un noeud maître de cycle du réseau de communication entier parmi les noeuds connectés au réseau, le portail serveur de cycle étant le portail connecté au bus auquel ledit noeud maître de cycle du réseau est également connecté, ledit portail serveur de cycle synchronisant son horloge propre sur une horloge dudit noeud maître de cycle du réseau.

Selon un mode de réalisation de l'invention, les bus de communication étant de type IEEE 1394, la synchronisation du portail serveur de cycle sur le noeud maître de cycle du réseau est effectuée par l'intermédiaire de paquets de début de cycle émis par ledit noeud, la fréquence d'émission de trames sur la partie sans fil du réseau étant un sous-multiple de la fréquence d'émission des paquets de début de cycle.

Selon un mode de réalisation de l'invention, l'horloge propre d'un portail qui n'est pas le portail serveur de cycle est utilisée pour synchroniser le bus auquel ledit portail est connecté.

L'invention a aussi pour objet un appareil pour interfacer un bus câblé et un réseau de communication sans fil, caractérisé en ce qu'il comporte :
- des moyens de récupération d'horloge à partir dudit bus câblé, ces moyens de récupération comprenant une boucle à verrouillage de phase pour se verrouiller sur un signal périodique circulant sur le bus câblé et un compteur pour comporter une valeur absolue d'horloge propre, ledit compteur étant relié à une horloge dérivée de la boucle à verrouillage de phase pour l'incrémentation dudit compteur, la valeur absolue dudit compteur étant synchronisée avec celle d'un noeud connecté au bus câblé ;
- des moyens d'émission périodique vers le réseau de communication sans fil d'une fenêtre de contrôle servant de référence temporelle aux autres appareils connectés au réseau sans fil, la génération de ladite fenêtre de contrôle étant liée à l'état dudit compteur, ladite fenêtre de contrôle comportant une information relative à l'état dudit compteur au moment de l'émission de ladite fenêtre de contrôle.

L'invention a aussi pour objet un appareil pour interfacer un bus câblé et un réseau de communication sans fil, caractérisé en ce qu'il comporte :
- des moyens de récupération d'horloge à partir d'un signal transmis sur ledit réseau de communication sans fil, lesdits moyens de récupération comprenant une boucle à verrouillage de phase et un registre d'horloge propre ;
- des moyens (µ') de sélection d'une fenêtre de contrôle parmi une pluralité de fenêtres de contrôle transmises sur le réseau sans fil ;
- des moyens (41) d'extraction d'une synchronisation de ladite fenêtre de contrôle pour alimentation de ladite boucle à verrouillage de phase ;
- des moyens (47) d'extraction d'informations relatives à la valeur absolue d'une horloge de référence de ladite fenêtre de contrôle, et de mise à jour dudit registre d'horloge propre.

D'autres caractéristiques et avantages de l'invention apparaîtront à travers la description d'un exemple de réalisation particulier non limitatif illustré par les figures jointes parmi lesquelles :
- la figure 1 est un diagramme représentant trois bus IEEE 1394 reliés par un pont constitué de trois portails communiquant entre eux par transmission sans fil,
- la figure 2 est un diagramme illustrant la gigue de phase introduite par l'émission d'un paquet asynchrone,
- la figure 3 est un schéma fonctionnel des circuits d'un pont recevant des données d'un bus et émettant vers le réseau 'sans fil',
- la figure 4 est un schéma fonctionnel des circuits d'un pont recevant des données du réseau 'sans fil' et émettant vers un bus,
- la figure 5 est un schéma d'un circuit de restitution d'une horloge de 8 kHz à partir d'une horloge de 8/N kHz,
- la figure 6 est un diagramme d'une trame utilisée dans l'exemple de réalisation.

Bien que l'exemple de réalisation concerne des bus IEEE 1394 et que la description utilise certains termes issus de la terminologie associée avec ce type de bus, l'invention ne se limite pas au bus IEEE 1394 et peut s'appliquer dans d'autres environnements.

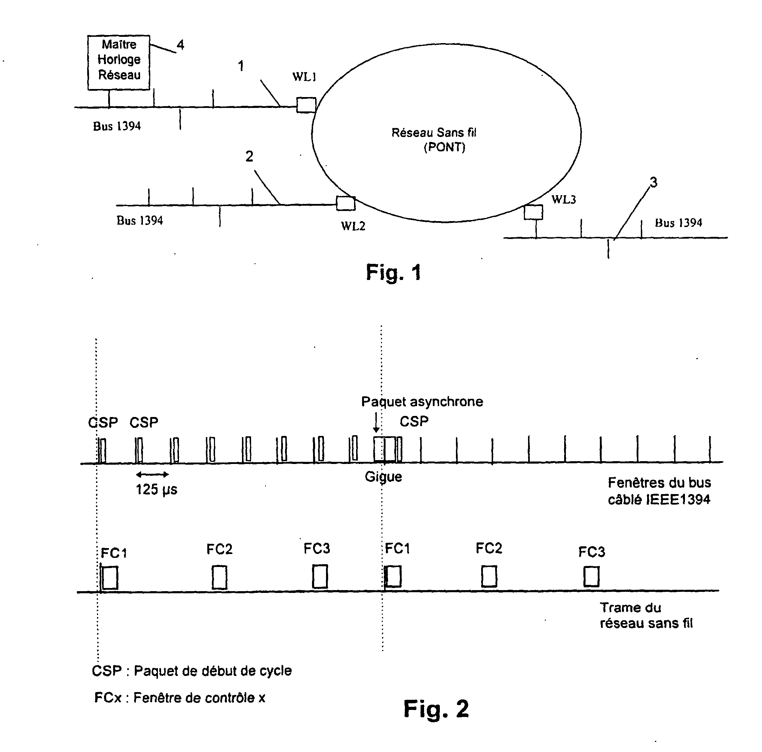

Le réseau de la figure 1 comporte trois bus de type IEEE 1394, référencés 1, 2 et 3, interconnectés par un réseau sans fil 5 auquel les bus sont reliés respectivement par des noeuds dits 'portails' ('portals' selon la terminologie adoptée par le document P1394.1) WL1, WL2 et WL3. Les portails communiquent entre eux par transmission sans fil, en radiofréquences selon le présent exemple de réalisation. On considère que la réunion des portails constitue ce que l'on appellera dans la suite un 'pont' sans fil, réalisant l'interconnexion des bus.

Ces portails sont chacun également membres d'un des bus câblés, et constituent donc des noeuds au sens du standard IEEE 1394 au même titre que les autres appareils connectés aux bus. Dans le but de synchroniser l'ensemble du réseau, un des appareils connecté à l'un des bus est élu 'appareil maître de cycle du réseau' ('net cycle master' en langue anglaise). Il est à noter que cette notion est plus large que celle de 'maître de cycle' qui est limitée à un bus. Cet appareil porte la référence 4 sur la figure 1. L'appareil maître de cycle du réseau, qui peut également être l'un des portails, est désigné par le gestionnaire du pont ('prime portal' selon la terminologie IEEE P1394.1) parmi les appareils maîtres de cycle des différents bus câblés. L'appareil maître de cycle du réseau peut, à titre d'exemple, être celui des appareils ayant potentiellement cette capacité et possédant un numéro de série ou d'identification le plus grand.

Le portail qui est l'appareil maître de cycle du réseau, ou le portail connecté au bus auquel est connecté l'appareil maître de cycle du réseau, est désigné sous le nom de 'serveur de cycle' ('cycle server' en langue anglaise). C'est le serveur de cycle qui est chargé de transmettre aux autres portails l'horloge en provenance de l'appareil maître de cycle du réseau. Les appareils maîtres de cycle des autres bus se caleront sur l'horloge reçue de leur portails.

Selon un mode de réalisation particulier de l'invention, chaque noeud est muni d'un registre dont deux drapeaux indiquent pour le premier drapeau si le noeud est maître de cycle du bus et pour le second drapeau si le noeud est maître de cycle du réseau. Il suffit ainsi à chaque portail de lire ce registre sur le maître de cycle de son bus (l'identificateur du noeud, appelé 'node_id' du maître de cycle est connu et a pour valeur 0). Le portail qui détermine que le maître de cycle de son bus est le maître de cycle du réseau devient alors le maître de cycle du réseau sans fil.

Le réseau sans fil utilise un mécanisme TDMA (pour 'Time Division Multiplex Access' en langue anglaise) pour l'accès au canal de transmission. Ce mécanisme d'accès fait l'objet d'une demande de brevet français déposée au nom de la Demanderesse le même jour que la demande de priorité de la présente demande (21 avril 1998), et ayant pour numéro de dépôt FR 9804983. Parallèlement, le mécanisme d'accès d'un noeud à un bus IEEE 1394 en soi est défini de manière plus précise dans la documentation IEEE relative à ce standard et à laquelle on se référera en cas de besoin.

Une trame TDMA est subdivisée en fenêtres pendant lesquelles les portails peuvent transmettre. L'attribution d'une ou plusieurs fenêtres à un portail se fait par un mécanisme de réservation permettant à un portail d'exprimer ses besoins de transmission et de les confronter aux besoins des autres portails pour un partage optimal du canal sans fil. La réservation se fait par l'intermédiaire des fenêtres dites de contrôle. Une fenêtre, qu'elle soit de contrôle ou de données, est un intervalle de temps prédéterminé dont le début est défini relativement par rapport au début de la trame. Une fenêtre de contrôle par trame est attribuée à chaque appareil susceptible d'émettre. L'information transmise par un portail dans sa fenêtre de contrôle est reprise et propagée dans les fenêtres de contrôle des autres portails. Ainsi, même en connectivité incomplète (à savoir lorsqu'il n'existe pas de liaison directe entre aux moins deux portails), les informations de contrôle sont propagées dans tout le réseau sans fil.

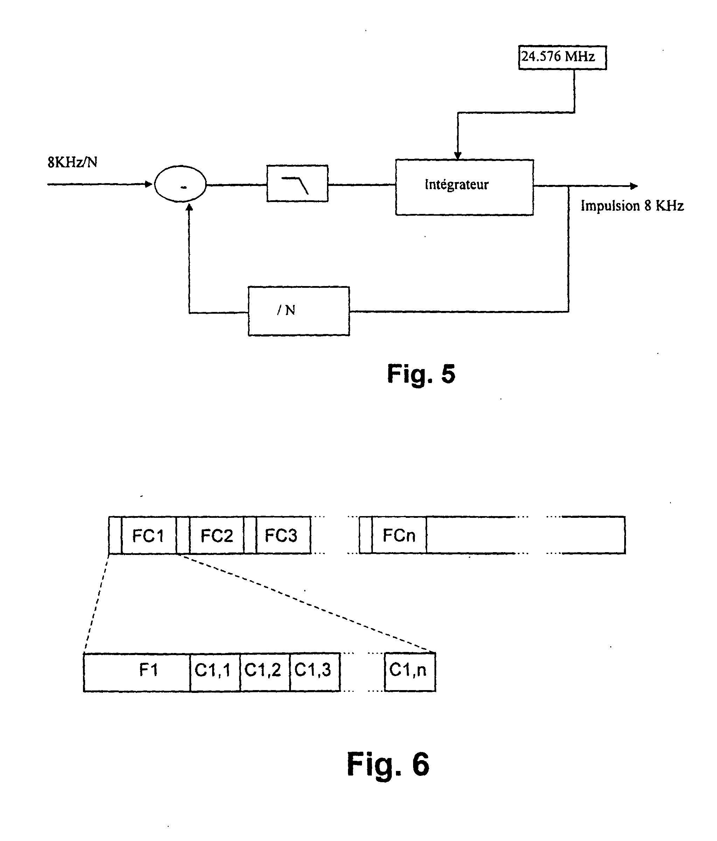

La figure 6 illustre le format d'une trame et d'une fenêtre de contrôle parmi celles présentes dans la trame.

La trame TDMA comporte une zone de n fenêtres de contrôle FCm et une zone de fenêtres de données D, où n est le nombre de portails du pont sans fil. Chaque fenêtre de contrôle FCm comporte une fenêtre dite fixe F, suivie de n fenêtres dites répétées Cm,p. Les fenêtres répétées Cm,p dans une fenêtre de contrôle ont le même ordre que les fenêtres de contrôle dans une trame. En d'autres termes, si un portail X émet la fenêtre de contrôle FC2, alors les fenêtres répétées Cm,2 des autres fenêtres de contrôle seront réservées à la répétition des données de contrôle du portail X.

Bien que toutes les fenêtres de contrôle soient contiguës dans l'exemple illustré par la figure 6, ceci n'est pas forcément toujours le cas: les fenêtres de contrôle et de données peuvent être entrelacées. La contrainte principale est que la position des fenêtres de contrôle dans la trame, ainsi que la correspondance de chaque fenêtre de contrôle avec chaque portail doit être connue par chacun des portails. A titre d'exemple pratique, les fenêtres de contrôle sont numérotées par ordre croissant et présentées dans cet ordre dans les trames. Chaque portail possède également un numéro d'ordre unique qui l'identifie au niveau du pont sans fil. Un portail utilise la fenêtre de contrôle qui correspond à son propre numéro unique.

La fenêtre de contrôle FCm est celle émise par le portail m. La fenêtre fixe de la fenêtre de contrôle FCm comporte des informations destinées aux portails voisins du portail émetteur m. Le contenu de cette fenêtre fixe n'est pas répété par les portails qui la reçoivent. Typiquement, la fenêtre fixe comporte l'adresse du portail émetteur et la distance du portail au serveur de cycle, ainsi qu'une requête de réservation de fenêtres de données en mode 'contention'.

La fenêtre répétée Cm,m de la fenêtre de contrôle FCm comporte des données indiquant si le portail m est serveur de cycle du réseau, ainsi que le cas échéant une requête en réservation en mode 'isochrone' ou en mode 'asynchrone' de fenêtres de données.

Les autres fenêtres répétées de la fenêtre de contrôle FCm comportent les contenus des fenêtres de contrôle reçus directement ou indirectement des portails autres que le portail m. Un portail ne répète qu'une fois les données de contrôle d'un autre portail. Dans ce but, chaque portail mémorise le contenu des fenêtres de contrôle reçues des autres portails et vérifie qu'il ne les a pas déjà répétées antérieurement avant de les recopier au niveau de sa propre fenêtre de contrôle.

On prévoit trois mécanismes de réservation de fenêtres de données :
- Un mécanisme de réservation isochrone : lorsqu'un portail souhaite transmettre un flux isochrone (correspondant à un débit connu et constant), il émet dans sa fenêtre de contrôle une donnée indiquant le nombre de fenêtres , par trame dont il estime avoir besoin. Cette réservation est valable pour les trames futures, jusqu'à annulation de la réservation.
- Un mécanisme de réservation asynchrone : à chaque trame, un portail émet dans sa fenêtre de contrôle une donnée indiquant le nombre de fenêtres de données qu'il souhaite réserver dans la trame présente. La réservation n'est valable que pour une trame et doit être renouvelée pour d'autres trames si besoin est.

Selon les deux mécanismes de réservation ci-dessus, chaque portail du réseau est en charge de répéter dans sa propre fenêtre de contrôle lors de trames futures les réservations de fenêtres effectuées par chaque autre portail connecté au réseau sans fil, telles qu'elles ont été précédemment transmises dans la fenêtre de contrôle réservée à chacun de ces autres portails. Chaque appareil déduit ensuite de ces demandes ainsi que de règles non équivoques quelle sera l'occupation réelle de la prochaine trame. Les règles non équivoques, qui ne font pas l'objet de la présente demande, servent à déterminer quel portail a le droit d'émettre lorsqu'il y a eu contention dans la réservation. Un appareil n'utilise effectivement le nombre de fenêtres réservées qu'une fois qu'il est certain que d'une part tous les appareils connectés au réseau sans fil ont bien reçu l'information, (ce qui dépend de la configuration du réseau), et que d'autre part c'est lui qui est autorisé à émettre (s'il y a eu contention dans la réservation)
- On prévoit enfin un dernier mécanisme dit à contention. De par la configuration du réseau (et des rebonds successifs nécessaires à la propagation des réservations), un portail peut avoir à patienter un certain nombre de trames entre le moment de la réservation, et le moment de l'envoi effectif des données. Il se peut cependant que la trame à venir s'avère peu chargée. Le mécanisme à contention peut être utilisé dans un tel cas. Le portail doit utiliser la fenêtre de contrôle pour indiquer le nombre de fenêtres qu'il va utiliser: ce seront des fenêtres non encore réservées. Il insère ses données dans la même trame que sa fenêtre de contrôle, dans des fenêtres de données qui suivent sa propre fenêtre de contrôle. Il est clair que si deux portails effectuent la même transmission au même moment, il y aura collision. La phase de transmission doit donc s'accompagner d'une phase d'accusé-réception, générée par le destinataire.

Le réseau sans fil utilise une trame isochrone calée sur un sous-multiple de l'horloge 8 kHz, c'est à dire une horloge à 8/N KHz. Avantageusement, on prendra pour N une puissance p de deux, et selon le présent exemple de réalisation, au maximum p=6. L'horloge est obtenue en considérant les 13-p bits de la seconde plage du registre d'horloge. Cette horloge est obtenue dans un premier temps, conformément à la norme IEEE 1394, par le pont WL1 (serveur de cycle) connecté au bus auquel est relié l'appareil maître de cycle du réseau 4.

On choisit une horloge 8/N kHz dans le but de réduire la bande passante consacrée aux données de contrôle par rapport aux données utiles dans les trames. Selon le présent exemple, N est choisi égal à 8. En raison des contraintes de transmission propres à la technique TDMA (où l'un des problèmes critiques est le contrôle automatique de gain ('CAG') côté réception qui doit s'effectuer chaque fois que l'émetteur change, le CAG nécessitant ainsi l'insertion d'un temps mort de 2 à 3 µs avant chaque trame), la durée d'une trame ne peut pas descendre en dessous d'une certaine valeur. On considère qu'une durée de 5µs est la valeur minimale pour ne pas perdre trop d'efficacité au niveau de la transmission. Comme déjà mentionné, les fenêtres de contrôle servent à signaler aux autres portails les intentions d'émission de chaque portail dans la trame. Il en résulte qu'il doit y avoir une fenêtre de contrôle par portail et par trame. Ces contraintes font que la perte de bande passante (information de contrôle / informations utiles) est plus forte sur une trame courte. L'utilisation d'une trame calée sur une horloge de 8/N KHz permet donc de réduire cette perte de bande passante.

La norme IEEE 1394 prévoit que l'accès au support de transmission se fait selon un principe d'arbitrage. Un noeud maître (élu au démarrage d'un bus) a le rôle d'arbitre pour décider de l'accès des autres noeuds au bus. Cependant, la norme ne prévoit pas la notion de fenêtres de données pour la transmission des données asynchrones. Ainsi, lorsqu'un transfert asynchrone est lancé suite à une négociation pour l'obtention du bus, on ne connaît pas à priori la durée de ce transfert. Il en résulte qu'un noeud peut être amené à patienter pendant un intervalle de temps de durée variable lorsqu'il sollicite l'obtention du bus.

Lors de la transmission de l'horloge du bus, le noeud maître doit générer une impulsion de synchronisation toutes les 125 µs. Ceci est réalisé par l'envoi d'un paquet ('Cycle start packet' ou CSP) dont le début constitue l'impulsion de synchronisation. Cependant il se peut que le bus soit occupé au moment où le maître de cycle du bus doit générer le paquet. Ce dernier doit donc attendre la fin de l'émission courante pour obtenir l'accès au bus. Il insère alors dans le paquet émis la valeur de son registre de temps pour que les autres noeuds puissent asservir leur horloge sur sa référence et effectuer la correction nécessaire. Cette gigue sur le début du paquet (estimée au maximum à 78 µs) correspond à la durée maximale d'un paquet asynchrone tel que défini dans le document IEEE 1394 et à la durée de la phase d'accusé réception mentionnée à l'annexe E de ce même document. La figure 2 illustre l'influence de la gigue sur l'émission du paquet de début de trame. Par ailleurs, selon l'exemple de la figure 2, les fenêtres de contrôle des portails sont répartis sur l'ensemble de la trame TDMA du réseau sans fil, et non concentrés au début de celle-ci comme dans l'exemple de la figure 6 décrite précédemment.

La transmission de l'horloge sur un bus IEEE 1394 comporte deux aspects: la transmission de la fréquence d'horloge (8 KHz), et la transmission du temps en valeur absolue, sous la forme de valeurs du registre de temps. Selon le standard IEEE 1394, on prévoit de réaliser ces deux aspects en même temps : toutes les 125 µs, le noeud maître de cycle du réseau génère un paquet contenant la valeur de son registre de temps au moment de l'émission (ceci en raison de la gigue du bus).

Selon l'invention, lors de la transmission de l'horloge sur le réseau sans fil, c'est-à-dire au-delà du bus 1394 auquel est relié le maître de cycle du réseau, on dissocie ces deux aspects (transmission de la fréquence et transmission de la valeur absolue de l'horloge).

Concernant tout d'abord l'émission de l'horloge sur le réseau sans fil, deux cas se présentent: soit le portail déterminant l'horloge de la partie sans fil du réseau est connecté à l'appareil maître du réseau par un bus IEEE 1394, soit il est lui-même cet appareil maître de cycle du réseau.

Dans le premier cas, une gigue maximale de 78 µs peut exister sur le début du paquet de début de cycle ('cycle start packet') envoyé au portail 'serveur de cycle' par l'appareil maître du réseau: c'est la gigue dont l'origine a été expliquée à l'aide de la figure 2. Selon le présent exemple de réalisation, l'insertion de la fenêtre de contrôle dans la trame n'est pas directement déclenchée par la réception du paquet de début de cycle sur le bus câblé, mais plutôt déterminée par le registre de temps du portail serveur de cycle. Si l'on suppose qu'une trame TDMA débute toutes les 1 ms, alors une trame TDMA doit débuter tous les 131047 coups d'horloge. On élimine ainsi la gigue dans le rythme transmis, en calant le début de trame TDMA sur le réseau sans fil sur l'horloge du portail serveur de cycle. Il faut noter que le registre de temps du portail est néanmoins asservi toutes les 125 µs par les valeurs reçues des paquets de début de cycle du noeud maître du réseau, de façon identique à tout autre noeud d'un bus IEEE 1394 câblé.

Dans le cas où le portail serveur de cycle est l'appareil maître du réseau, il n'y a pas de gigue du type décrit ci-dessus. L'horloge du portail serveur de cycle est en roue libre.

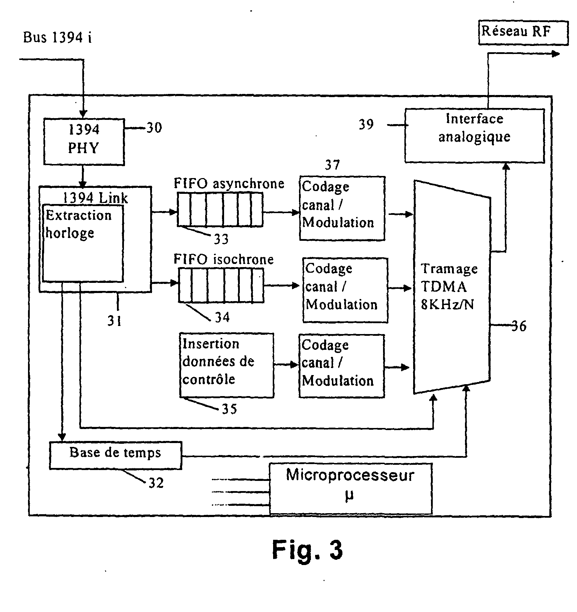

La figure 3 représente les circuits de connexion au bus IEEE 1394 câblé et la partie émission d'un portail. Le portail comporte une interface physique 30, un circuit de démodulation et de décodage canal 31 qui extrait les valeurs des bits du registre d'horloge des paquets de début de cycle ('Cycle start packets' selon la terminologie du document IEEE 1394), une base de temps 32 constituée par le registre d'horloge du portail, incrémenté au rythme d'une horloge interne comportant une boucle à verrouillage de phase munie d'un oscillateur de fréquence de base 24,576 MHz et verrouillable sur les paquets de début de cycle du bus câblé, une pile FIFO asynchrone 33 pour contenir les données utiles pour la transmission de paquets asynchrones, une pile FIFO isochrone 34 pour contenir les données utiles pour la transmission isochrone dans les fenêtres isochrones des trames TDMA, ainsi qu'un circuit 35 d'insertion des données de contrôle, notamment des données destinées à la fenêtre de contrôle de la trame TDMA réservée au portail. Ce dernier circuit 35 insère également le mot de synchronisation en début de sa fenêtre de contrôle. Les deux piles FIFO 33 et 34, ainsi que le circuit d'insertion 35 sont reliés chacun à un circuit de codage canal et de modulation (seul le circuit 37 est référencé), puis à un multiplexeur 36 contrôlé par un microcoprocesseur µ qui gère également les compensations des délais de traitement décrites ci-après. Les diverses connexions du microprocesseur, qui est responsable de l'ensemble de la gestion du portail, ne sont pas illustrées sur la figure 3 pour ne pas nuire à la clarté du schéma. Le circuit 36 effectue également l'assemblage de la trame TDMA. Une interface analogique 39 effectue la liaison avec le réseau sans fil en fréquence radio et notamment les transpositions vers la bande de fréquences requise.

Il a été constaté que le temps de traitement à l'émission ou à la réception dans la partie sans fil du réseau n'est pas négligeable par rapport au marquage temporel des paquets de données. Ce retard correspond à la modulation et au codage canal au niveau de l'émetteur, et au décodage canal et à la démodulation au niveau du récepteur. Selon le présent exemple de réalisation, ce temps de traitement est compensé tant au niveau de l'émetteur que du récepteur. Un portail émetteur, ayant un temps de traitement sensiblement fixe, ajoute le nombre de coups d'horloge correspondant à ce temps de traitement à la valeur d'horloge de son registre de temps, de sorte que la valeur d'horloge incluse dans la fenêtre de contrôle corresponde au moment de l'émission effective de la fenêtre de contrôle. De même, un portail récepteur ajoute à la valeur d'horloge reçue un nombre de coups d'horloge correspondant à son temps de traitement. Les temps de traitement à l'émission et à la réception peuvent être mémorisés dans des registres au niveau de chaque portail.

On décrira dans ce qui suit la récupération de la fréquence d'horloge, puis la récupération de la valeur d'horloge au niveau de chaque portail.

Au niveau d'un portail autre que le portail serveur de cycle, la récupération du rythme d'horloge est effectuée via une boucle à verrouillage de phase comportant un oscillateur contrôlé de fréquence de base 24,576 MHz.

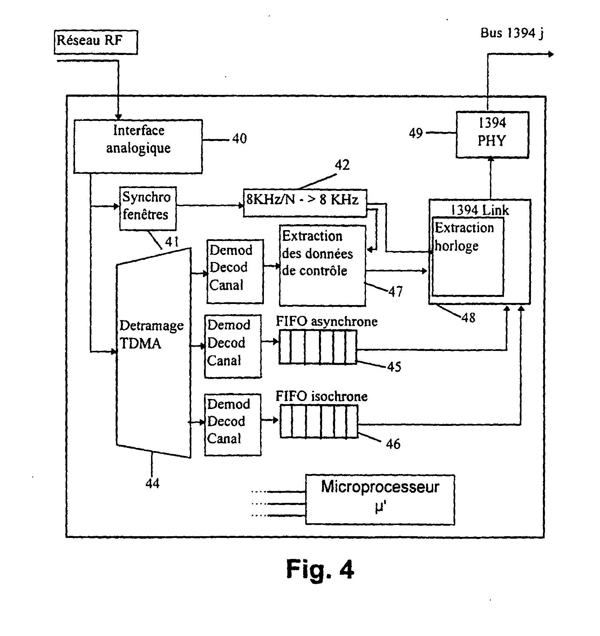

La figure 4 est un schéma des circuits de réception et de connexion à un bus 1394 d'un des portails de la figure 1. Le portail de la figure 4 comporte une interface analogique 40 pour la réception des signaux RF réalisant notamment les transpositions vers la bande de fréquence de base, un extracteur 41 de synchronisation des paquets récupérant les début des fenêtres de contrôle et alimentant une boucle à verrouillage de phase 42 de rétablissement de l'horloge 8 kHz à partir des débuts de fenêtres de contrôle générés à une fréquence de 8/N kHz, un circuit 43 de démodulation et de décodage canal du contenu de la trame, cette dernière étant démultiplexée par un démultiplexeur 44 connecté à une pile FIFO asynchrone 45, une pile FIFO isochrone 46 et une mémoire des données de contrôle 47 comportant également un registre de temps du portail. Le portail comporte également un circuit 48 de liaison IEEE 1394 et une interface physique 49 avec le bus IEEE 1394 câblé associé au portail. En dernier lieu, le portail comporte un microprocesseur µ'.

La figure 5 est un schéma du circuit 42 de la figure 4. Les valeurs numériques figurant sur la figure sont données à titre d'exemple. L'horloge de 8 KHz restituée doit avoir une gigue comparable à la gigue de l'horloge 8 KHz d'un bus IEEE 1394 câblé, cette dernière étant asservie par les paquets de début de cycle à la fréquence de 8kHz, au lieu de 8/N KHz pour les portails du réseau sans fil. Cette gigue correspond à +/- 1/2 période de 24.576 MHz.

Pendant une trame, chaque portail reçoit de manière intelligible des fenêtres de contrôle d'un ou plusieurs autres portails. Il ne reçoit pas forcément les fenêtres de contrôle de chaque autre portail, étant donné la connectivité non totale de la partie sans fil du réseau. Le portail sélectionne une des fenêtres de contrôle reçues, en privilégiant la fenêtre contenant la plus petite distance par rapport au portail serveur de cycle connecté au même bus que l'appareil maître de cycle du réseau. C'est de cette fenêtre de contrôle que le portail utilise pour synchroniser sa propre horloge. Chaque fenêtre de contrôle comporte un mot de synchronisation permettant d'en repérer le début, et comporte dans sa fenêtre fixe l'identification de l'émetteur, ainsi que la distance de celui-ci par rapport au portail serveur de cycle. Chaque fois que la fenêtre de contrôle sélectionnée est repérée par le portail, ce dernier génère une impulsion à destination de sa boucle à verrouillage de phase.

On définit la distance entre un portail de la partie sans fil du réseau et le portail générant la référence temporelle de cette partie sans fil du réseau (portail serveur de cycle) comme étant le nombre minimum de 'sauts' entre ce portail et le portail serveur de cycle. Il s'agit, dans le présent exemple de réalisation, du nombre de trames TDMA nécessaires pour que le contenu de la fenêtre de contrôle du portail serveur de cycle parvienne à l'autre portail. De façon pratique, les portails pouvant être atteints par liaison sans fil directement par le portail serveur de cycle sont à la distance '1' de ce dernier. Les portails incluent la distance qui les sépare du portail serveur de cycle dans leur fenêtre de contrôle. Un portail choisit, parmi toutes les distances qu'il reçoit de manière intelligible dans les fenêtres de contrôle, la distance la plus faible. Cette distance, incrémentée de 1, est sa propre distance par rapport au portail serveur de cycle. Les distances sont transmises dans toutes les fenêtres de contrôle. Le portail serveur de cycle aura une distance de 0.

Avantageusement, la synchronisation est toujours effectuée sur la base de la même fenêtre de contrôle, tant qu'elle est reçue de manière intelligible. Ainsi, le temps d'acheminement ne varie pas de trame à trame.

La transmission et l'extraction de la valeur d'horloge transmise par le portail serveur de cycle est effectuée de la façon suivante :

Dans la trame du réseau sans fil, la position et la taille de chaque fenêtre de contrôle sont fixes, de sorte qu'il n'y a pas de gigue sur le début d'une fenêtre de contrôle Cm d'une trame à l'autre. Il en résulte que la transmission des poids faibles du registre de temps du portail serveur de cycle (correspondant à l'horloge 24.576 MHz) est inutile.

En soi, la synchronisation des valeurs d'horloge des portails est nécessaire pour réaliser une interprétation correcte des étiquettes temporelles définies dans le standard IEC 61883.

Il existe deux possibilités pour transmettre cette valeur de temps :
- Soit le portail serveur de cycle envoie explicitement la valeur nécessaire de son registre de temps sur détection de cet événement (à savoir les 7 bits de poids fort décrivant les secondes, et les (13-N) bits de poids intermédiaires décrivant la valeur du compteur 8/N kHz).

Or, il n'est utile de transmettre une valeur de temps complète qu'au démarrage d'un noeud, pour qu'il puisse acquérir la valeur absolue comprise dans le registre du portail serveur de cycle: la transmettre à chaque fenêtre de contrôle demanderait trop de bande passante.
- Soit le portail serveur de cycle envoie en permanence dans sa fenêtre de contrôle un sous-ensemble des bits de son registre de temps, en les décalant à chaque trame. Ceci peut être réalisé de la façon suivante : 2 bits de chaque fenêtre fixe de chaque fenêtre de contrôle sont dédiés à cet usage : le premier bit indique si le second bit est le bit de poids le plus faible de la valeur d'horloge (bits non transmis mis à part - voir ci-dessous) ou s'il s'agit d'un autre bit quelconque. Le second bit est un bit de la valeur d'horloge. Les valeurs de bits courants sont transmis du poids faible vers le poids fort. Ainsi un portail cherchant à s'initialiser attend le signal indiquant la présence du bit de poids le plus faible, et commence le rafraîchissement de son registre de temps bit à bit au fil des trames, en progressant vers les poids forts. Il est important que même lors du rafraîchissement du registre, celui-ci continue à s'incrémenter au rythme de l'horloge locale générée par la boucle à verrouillage de phase.

Si l'on considère qu'une trame TDMA est transmise toutes les 1 KHz, alors seuls les 17 bits de poids fort du registre de temps sont significatifs et seront effectivement transmis selon la seconde possibilité.

Les 12 bits de la plage de poids le plus faible, ainsi que les p bits de poids le plus faible de la partie médiane du registre d'horloge du portail sont déterminées par le portail lui-même, en fonction de son temps de traitement propre.

Côté émetteur, on considère que cette plage de 12 bits non émise est à 0 au moment de l'émission d'une fenêtre. Pour compenser le temps de traitement à l'émission, l'émission est déclenchée un nombre de coups d'horloge prédéterminé avant que le compteur n'atteigne la valeur correspondant à la plage de 12 bits nuls.Le temps de traitement à l'émission est déterminé par des mécanismes de calibration, par exemple au moment de la conception de l'émetteur.

Côté récepteur, une correction similaire du temps de traitement à la réception est effectuée.

En résumé, la propagation de l'horloge sur le réseau sans fil se fait selon le mécanisme suivant :

Chaque portail dispose d'un registre de temps. Ce registre de temps est utilisé par chaque portail pour déclencher l'émission de sa propre fenêtre de contrôle dans le cadre d'une trame TDMA.

Chaque portail réalise un asservissement de son registre de temps. Cet asservissement dépend de la topologie du réseau : si le portail est l'appareil maître de cycle du réseau, alors, il n'y a pas d'asservissement sur son registre de temps. Si le portail est connecté au même bus IEEE 1394 que l'appareil maître de cycle du réseau (et qu'il est le seul portail sur ce bus, sinon une résolution de contention est à prévoir entre les portails prétendants), alors le portail, dénommé 'serveur de cycle du réseau', asservit son registre de temps sur les paquets de début de cycle reçus de son bus (comme tout noeud 'esclave de cycle' IEEE 1394). Dans tous les autres cas, le portail doit asservir son registre de temps sur la réception de la fenêtre de contrôle à distance la plus faible du portail 'serveur de cycle'.

L'horloge ainsi récupérée par chaque portail est utilisée pour le bus auquel le portail est connecté.

Bien que les circuits de réception et d'émission des figures 3 et 4 soient représentés de manière séparée dans la description, il est clair que ces circuits peuvent être intégrés dans un seul appareil émetteur/récepteur sur le réseau sans fil. Il est bien évident que dans ce cas certains des éléments de ces circuits n'ont pas à être dédoublés : microprocesseur, circuit 1394 physique etc... géreront aussi bien la réception que l'émission. Il est à la portée de l'Homme du Métier de modifier et de combiner les circuits de réception et d'émission dans un même appareil sans introduire de redondance.

## Revendications

1. Procédé de synchronisation dans un réseau de communication comportant au moins deux bus interconnectés par un réseau de communication sans fil, chaque bus étant relié au réseau de communication sans fil par un portail, ledit procédé étant **caractérisé en ce qu'**il comporte les étapes :
- de détermination d'un portail dit serveur de cycle et dont une horloge propre servira de référence aux autres portails ;
- d'émission par chaque portail d'un signal de synchronisation à un instant prédéterminé par rapport au début d'une trame et caractéristique de chaque portail, ladite trame étant définie par rapport à l'horloge interne propre de chaque portail, ledit signal de synchronisation étant réalisé par l'insertion d'une fenêtre de contrôle ;
- de détection par chaque portail des fenêtres de contrôle d'autres portails et de sélection d'une des fenêtres détectées pour la synchronisation d'une horloge propre du portail récepteur avec l'horloge du portail serveur de cycle, ladite fenêtre sélectionnée correspondant à un portail dont l'horloge est déjà synchronisée avec celle du portail serveur de cycle.

2. Procédé selon la revendication 1, **caractérisé en ce qu'**une fenêtre de contrôle comporte au moins une partie d'une valeur de l'horloge du portail émetteur de ladite fenêtre de contrôle, ladite valeur étant celle de l'horloge au moment de l'émission de ladite fenêtre de contrôle, ladite valeur transmise étant utilisée par le portail récepteur pour mettre à jour la valeur de son horloge propre.

3. Procédé selon la revendication 2, **caractérisé en ce que** la valeur d'horloge transmise par un portail comporte une correction pour compenser le temps de traitement de la fenêtre de contrôle à l'émission.

4. Procédé selon les revendications 2 ou 3, **caractérisé en ce que** la valeur d'horloge reçue par un portail est corrigée, avant la mise à jour de la valeur de l'horloge propre, pour prendre en compte le temps de traitement en réception dudit portail.

5. Procédé selon l'une des revendications précédentes, **caractérisé en ce que** ladite valeur d'horloge est scindée en plusieurs groupes de bits d'au moins un bit chacun transmis sur des fenêtres de contrôle successives émises par un même portail.

6. Procédé selon l'une des revendications précédentes, **caractérisé en ce qu'**il comporte en outre l'étape de détermination par chaque portail de sa distance par rapport au portail serveur de cycle, ladite distance d'un portail donné étant définie comme étant le nombre minimum de portails répéteurs requis pour qu'une information en provenance du portail serveur de cycle parvienne au dit portail donné.

7. Procédé selon la revendication 6, **caractérisé en ce que** la fenêtre de contrôle choisie par un portail donné pour se synchroniser est la fenêtre de contrôle d'un portail ayant la distance la plus faible parmi les fenêtres de contrôle reçues par ledit portail donné.

8. Procédé selon l'une des revendications précédentes, **caractérisé en ce qu'**il comporte en outre l'étape de verrouillage d'une boucle à verrouillage de phase d'un portail récepteur sur l'instant de réception de la fenêtre de contrôle sélectionnée, ladite boucle à verrouillage de phase étant utilisée pour incrémenter un registre comportant la valeur d'horloge propre dudit portail.

9. Procédé selon l'une des revendications précédentes, **caractérisé en ce qu'**il comporte en outre l'étape de sélection d'un noeud maître de cycle du réseau de communication entier parmi les noeuds connectés au réseau, le portail serveur de cycle étant le portail connecté au bus auquel ledit noeud maître de cycle du réseau est également connecté, ledit portail serveur de cycle synchronisant son horloge propre sur une horloge dudit noeud maître de cycle du réseau.

10. Procédé selon la revendication 9, **caractérisé en ce que** les bus de communication étant de type IEEE 1394, la synchronisation du portail serveur de cycle sur le noeud maître de cycle du réseau est effectuée par l'intermédiaire de paquets de début de cycle émis par ledit noeud, la fréquence d'émission de trames sur la partie sans fil du réseau étant un sous-multiple de la fréquence d'émission des paquets de début de cycle.

11. Procédé selon l'une des revendications précédentes, **caractérisé en ce que** l'horloge propre d'un portail qui n'est pas le portail serveur de cycle est utilisée pour synchroniser le bus auquel ledit portail est connecté.

12. Procédé selon l'une des revendications précédentes, **caractérisé en ce que** les portails communiquent par l'intermédiaire de trames de type TDMA.

13. Appareil pour interfacer un bus câblé et un réseau de communication sans fil, **caractérisé en ce qu'**il comporte :
- des moyens (30, 31, 32) de récupération d'horloge à partir dudit bus câblé, ces moyens de récupération comprenant une horloge interne propre et un compteur pour comporter une valeur absolue d'horloge propre, ledit compteur étant relié à l'horloge propre pour l'incrémentation dudit compteur, la valeur absolue dudit compteur étant synchronisée avec celle d'un noeud connecté au bus câblé ;
- des moyens d'émission périodique vers le réseau de communication sans fil d'une fenêtre de contrôle servant de référence temporelle aux autres appareils connectés au réseau sans fil, la génération de ladite fenêtre de contrôle étant liée à l'état dudit compteur, ladite fenêtre de contrôle comportant une information relative à l'état dudit compteur au moment de l'émission de ladite fenêtre de contrôle.

14. Appareil pour interfacer un bus câblé et un réseau de communication sans fil, **caractérisé en ce qu'**il comporte :
- des moyens (40, 41, 42, 47) de récupération d'horloge à partir d'un signal transmis sur ledit réseau de communication sans fil, lesdits moyens de récupération comprenant une boucle à verrouillage de phase et un registre d'horloge propre ;
- des moyens (µ') de sélection d'une fenêtre de contrôle parmi une pluralité de fenêtres de contrôle transmises sur le réseau sans fil ;
- des moyens (41) d'extraction d'une synchronisation de ladite fenêtre de contrôle pour alimentation de ladite boucle à verrouillage de phase ;
- des moyens (47) d'extraction d'informations relatives à la valeur absolue d'une horloge de référence de ladite fenêtre de contrôle, et de mise à jour dudit registre d'horloge propre.

## Patentansprüche

1. Verfahren zur Synchronisierung in einem Kommunikationsnetz mit wenigstens zwei Bussen, die durch ein drahtloses Kommunikationsnetz miteinander verbunden sind, wobei jeder Bus über ein Portal mit dem drahtlosen Kommunikationsnetz verbunden ist,
**gekennzeichnet durch** folgende Schritte:
- Bestimmung eines sogenannten Zyklus-Server-Portals, dessen eigener Takt als Referenz für die anderen Portale dient,
- Übertragung eines Synchronisiersignals **durch** jedes Portal bei einem vorbestimmten Zeitpunkt relativ zu dem Start eines Rahmens und **gekennzeichnet durch** jedes Portal, wobei dieser Rahmen bezüglich jedes zu jedem Portal gehörenden Taktes definiert ist und das Synchronisiersignal **durch** Einfügung eines Steuerfensters gebildet wird,
- Detektion der Steuerfenster der anderen Portale **durch** jedes Portal und Auswahl eines der detektierten Fenster für die Synchronisierung des Taktes des Empfängerportals mit dem Takt des Zyklus-Server-Portals, wobei das gewählte Fenster einem Portal entspricht, dessen Takt mit demjenigen des Zyklus-Server-Portals bereits synchronisiert ist.

2. Verfahren nach Anspruch 1, **dadurch gekennzeichnet, dass** ein Steuerfenster wenigstens einen Teil eines Wertes des Taktes des Senderportals des Steuerfensters enthält und der Wert derjenige des Taktes im Zeitpunkt der Übertragung des Steuerfensters ist und der übertragene Wert durch das Empfängerportal dafür benutzt wird, um den Wert seines eigenen Taktes zu aktualisieren.

3. Verfahren nach Anspruch 2, **dadurch gekennzeichnet, dass** der durch ein Portal übertragene Taktwert eine Korrektur für die Kompensation der Verarbeitungszeit des Steuerfensters bei der Übertragung enthält.

4. Verfahren nach einem der Ansprüche 2 oder 3, **dadurch gekennzeichnet, dass** der durch ein Portal empfangene Taktwert vor der Aktualisierung des Wertes seines eigenen Taktes korrigiert wird, um die Verarbeitungszeit des Portals beim Empfang zu berücksichtigen.

5. Verfahren nach einem der vorangehenden Ansprüche, **dadurch gekennzeichnet, dass** der Taktwert in mehrere Gruppen von Bit aufgespalten wird, die über aufeinanderfolgende Steuerfenster übertragen werden, die durch ein und dasselbe Portal übertragen werden.

6. Verfahren nach einem der vorangehenden Ansprüche, **dadurch gekennzeichnet, dass** es außerdem den Schritt der Bestimmung seines Abstands zu dem Zylkus-Server-Portal durch jedes Portal enthält und dass der Abstand eines bestimmten Portals als die Minimalzahl von Wiederholerportalen bestimmt wird, die benötigt werden, damit ein Datenwort von dem Zyklus-Server-Portal das bestimmte Portal erreicht.

7. Verfahren nach Anspruch 6, **dadurch gekennzeichnet, dass** das Steuerfenster, das durch ein bestimmtes Portal für seine eigene Synchronisierung gewählt wird, das Steuerfenster eines Portals ist, das den kürzesten Abstand unter den durch das bestimmte Portal empfangenen Steuerfenstern aufweist.

8. Verfahren nach einem der vorangehenden Ansprüche, **dadurch gekennzeichnet, dass** es außerdem den Schritt der Verriegelung einer phasenverkoppelten Schleife eines Empfängerportals auf den Zeitpunkt des Empfangs des gewählten Steuerfensters und die phasenverkoppelte Schleife zur Inkrementierung eines Registers dient, das den Taktwert dieses Portals enthält.

9. Verfahren nach einem der vorangehenden Ansprüche, **dadurch gekennzeichnet, dass** es außerdem den Schritt der Wahl eines Zyklus-Master-Knotens des gesamten Kommunikationsnetzes aus den Knoten enthält, die mit dem Netz verbunden sind, und das Zyklus-Server-Portal das Portal ist, das mit dem Bus verbunden ist, mit dem der Zyklus-Master-Knoten des Netzes ebenfalls verbunden ist, und das Zyklus-Server-Portal seinen eigenen Takt auf einen Takt des Zyklus-Master-Knotens des Netzes synchronisiert.

10. Verfahren nach Anspruch 9, **dadurch gekennzeichnet, dass** der Kommunikationsbus vom Typ IEEE 1394 ist, dass die Synchronisierung des Zyklus-Server-Portals auf den Zyklus-Master-Knoten des Netzes durch Zyklus-Startpakete erfolgt, die durch den Knoten übertragen werden, dass die Frequenz der Übertragung von Rahmen über den drahtlosen Teil des Netzes ein Untervielfaches der Frequenz der Übertragung der Zyklus-Start-Pakete ist.

11. Verfahren nach einem der vorangehenden Ansprüche, **dadurch gekennzeichnet, dass** der Takt für ein Portal, das nicht das Zyklus-Server-Portal ist, zur Synchronisierung des Bus dient, mit dem das Portal verbunden ist.

12. Verfahren nach einem der vorangehenden Ansprüche, **dadurch gekennzeichnet, dass** die Portale über Rahmen vom Typ TDMA miteinander kommunizieren.

13. Vorrichtung zur Schnittstellenbildung für einen Kabelbus und ein drahtloses Kommunikationsnetz, **gekennzeichnet durch** folgende Merkmale:
- diesen Kabelbus benutzende Mittel (30, 31, 32) zur Taktrückgewinnung, wobei diese Rückgewinnungsmittel eine phasenverkoppelte Schleife zur Verkopplung auf ein periodisches Signal und einen Zähler zum Zählen eines Takteigenen Absolutwertes enthalten und der Zähler mit einem Takt verbunden ist, der aus der phasenverkoppelten Schleife zur Inkrementierung des Zählers abgeleitet ist, und der Absolutwert des Zählers mit demjenigen eines mit dem Kabelbus verbundenen Knotens synchronisiert ist,
- Mittel zur periodischen Übertragung eines Steuerfensters zu dem drahtlosen Kommunikationsnetz, wobei das Steuerfenster als Zeitreferenz für die anderen mit dem drahtlosen Netz verbundenen Vorrichtungen dient, die Erzeugung des Steuerfensters mit dem Zustand des Zählers verknüpft sind, das Steuerfenster ein Datenwort für den Zustand des Zählers im Zeitpunkt der Übertragung des Steuerfensters enthält.

14. Vorrichtung zur Schnittstellenbildung zwischen einem Kabelbus und einem drahtlosen Kommunikationsnetz, **gekennzeichnet durch** folgende Merkmale:
- Mittel (40, 41, 42, 47) zur Taktrückgewinnung aus einem über das drahtlose Kommunikationsnetz übertragenen Signal, wobei die Rückgewinnungsmittel eine phasenverkoppelte Schleife und ein takteigenes Register enthalten,
- Mittel (µ') zur Wahl eines Steuerfensters aus mehreren über das drahtlose Netz übertragenen Steuerfenstern,
- Mittel (41) zur Extrahierung einer Synchronisierung des Steuerfensters zur Speisung der phasenverkoppelten Schleife,
- Mittel (47) zur Extrahierung von Datenwörtern für den Absolutwert eines Referenztaktes des Steuerfensters und zur Aktualisierung des takteigenen Registers.

## Claims

1. Process for synchronization in a communication network comprising at least two buses interconnected by a wireless communication network, each bus being linked to the wireless communication network by a portal, the said process being **characterized in that** it comprises the steps:
- of determining a so-called cycle server portal whose own clock will serve as reference for the other portals;
- of transmitting, via each portal, a synchronization signal at a predetermined instant with respect to the start of a frame and characteristic of each portal, the said frame being defined with respect to each portal's own internal clock, the said synchronization signal being achieved via the insertion of a control window;
- of detecting, via each portal, the control windows of other portals and of selecting one of the detected windows for the synchronization of the receiver portal's own clock with the clock of the cycle server portal, the said selected window corresponding to a portal whose clock is already synchronized with that of the cycle server portal.

2. Process according to Claim 1, **characterized in that** a control window comprises at least a part of a value of the clock of the transmitter portal of the said control window, the said value being that of the clock at the moment of transmission of the said control window, the said value transmitted being used by the receiver portal to update the value of its own clock.

3. Process according to Claim 2, **characterized in that** the clock value transmitted by a portal comprises a correction for compensating for the processing time of the control window on transmission.

4. Process according to Claims 2 or 3, **characterized in that** the clock value received by a portal is corrected, before the updating of the value of its own clock, so as to take account of the reception processing time of the said portal.

5. Process according to one of the preceding claims, **characterized in that** the said clock value is split up into several groups of bits of at least one bit each transmitted over successive control windows transmitted by one and the same portal.

6. Process according to one of the preceding claims, **characterized in that** it furthermore comprises the step of determining, by each portal, its distance with respect to the cycle server portal, the said distance of a given portal being defined as being the minimum number of repeater portals required in order for an item originating from the cycle server portal to reach the said given portal.

7. Process according to Claim 6, **characterized in that** the control window chosen by a given portal for synchronizing itself is the control window of a portal having the shortest distance among the control windows received by the said given portal.

8. Process according to one of the preceding claims, **characterized in that** it furthermore includes the step of locking a phase locked loop of a receiver portal to the instant of reception of the selected control window, the said phase locked loop being used to increment a register containing the said portal's own clock value.

9. Process according to one of the preceding claims, **characterized in that** it furthermore comprises the step of selecting a cycle master node of the entire communication network from among the nodes connected to the network, the cycle server portal being the portal connected to the bus to which the said cycle master node of the network is also connected, the said cycle server portal synchronizing its own clock to a clock of the said cycle master node of the network.

10. Process according to Claim 9, **characterized in that** the communication buses being of the IEEE 1394 type, the synchronization of the cycle server portal to the cycle master node of the network is performed by way of cycle start packets transmitted by the said node, the frequency of transmission of frames over the wireless part of the network being a submultiple of the frequency of transmission of the cycle start packets.

11. Process according to one of the preceding claims, **characterized in that** a clock belonging to a portal which is not the cycle server portal is used to synchronize the bus to which the said portal is connected.

12. Process according to one of the preceding claims, **characterized in that** the portals communicate via TDMA-type frames.

13. Apparatus for interfacing a cable bus and a wireless communication network, **characterized in that** it comprises:
- means (30, 31, 32) of clock recovery utilizing the said cable bus, these recovery means comprising an own internal clock bus and a counter for comprising an own-clock absolute value, the said counter being linked to the own clock for the incrementation of the said counter, the absolute value of the said counter being synchronized with that of a node connected to the cable bus;
- means of periodic transmission to the wireless communication network of a control window serving as time reference for the other apparatuses connected to the wireless network, the generation of the said control window being bound with the state of the said counter, the said control window comprising an item relating to the state of the said counter at the moment of transmission of the said control window.

14. Apparatus for interfacing a cable bus and a wireless communication network, **characterized in that** it comprises:
- means (40, 41, 42, 47) of clock recovery utilizing a signal transmitted over the said wireless communication network, the said recovery means comprising a phase locked loop and an own-clock register;
- means (µ') for selecting one control window from among a plurality of control windows transmitted over the wireless network;
- means (41) for extracting a synchronization of the said control window for feeding the said phase locked loop;
- means (47) for extracting items relating to the absolute value of a reference clock of the said control window, and for updating the said own-clock register.
